# EUROPEAN PATENT SPECIFICATION

(11) **EP 1 852 370 B1**
(45) Date of publication and mention of the grant of the patent: **17.03.2010**
(21) Application number: 07106663.3
(22) Date of filing: 20.04.2007
(51) Int. Cl.: B65G 23/30

(54) **Conveyor for organising items**
Förderband zur Organisation von Elementen
Convoyeur pour l'organisation d'articles

(30) Priority: 24.05.2006 EP 06114452; 04.05.2006 EP 06113529
(43) Date of publication of application: 07.11.2007
(73) Proprietor: B.V. Machinefabriek P.M. Duyvis, 1540 AA Koog aan de Zaan (NL)
(72) Inventor: Van Vliet, Dick, 1981 KN Velzen-Zuid (NL)
(74) Representative: Aalbers, Arnt Reinier

(56) References cited:
- NL-C2- 1 004 752
- US-A- 3 903 806

## Description

The invention relates to a conveyor for organising items, in particular for unstacking, separating and/or turning over goods, such as pieces of luggage, comprising a frame and an endless belt mounted in the frame and providing a top surface for carrying a plurality of items according to the preamble of claim 1. The invention also relates to a system for handling items and to a method of organising items according to the preamble of claims 5 and 6 respectively.

European patent application EP 1 106 544 relates to a separating conveyor for tooth brushes, which has a metering feed onto multiple conveyors (14-18) operating at different speeds to separate the brushes. The feed speeds can be controlled so that consistent feeding of individual brushes occurs. The feed can include a cascade of conveyor belts, with stepped heights. Successive conveyors can have higher speeds than the preceding conveyors.

US 5,056,647 relates to a high-speed conveyor system for conveying articles of baggage, which includes a number of accelerating conveyor belt sections arranged in tandem for transporting a number of baggage articles loaded onto an upstream end of a first one of the belt sections to a downstream end of a last one of the belt sections. The sections are driven at successively increasing rates of speed from the first to the last one. High-speed conveyor belt sections transport baggage articles received from the last one of the accelerating conveyor belt sections at a substantially high rate of speed over a relatively long distance to a downstream end of the high-speed sections. A number of decelerating conveyor belt sections are arranged in tandem for transporting baggage articles fed from the high-speed conveyor belt sections onto an upstream end of a first one of the decelerating conveyor belt sections. The baggage articles are conveyed to a downstream end of a last one of the decelerating conveyor belt section at successively decreasing rates of speed from the first to the last one of the belt sections.

US 3,903, 806 relates to a pleated, variable speed conveyor as stated in the preamble of claim 1 and means for driving the conveyor including screw drives and variable width, variable speed belts.

It is an object of the present invention to provide a more compact conveyor for organising items.

To this end, the conveyor according to the present invention is arranged as defined in claim 1.

It is preferred that the belt comprises a chain of pivotally interconnected elements. It is further preferred that the elements are at least substantially flat, i.e. two of the outer dimensions are at least two times, preferably at least three times larger than the third outer dimension, and comprise a first surface for carrying items in a folded condition and a second surface for carrying items in an unfolded condition.

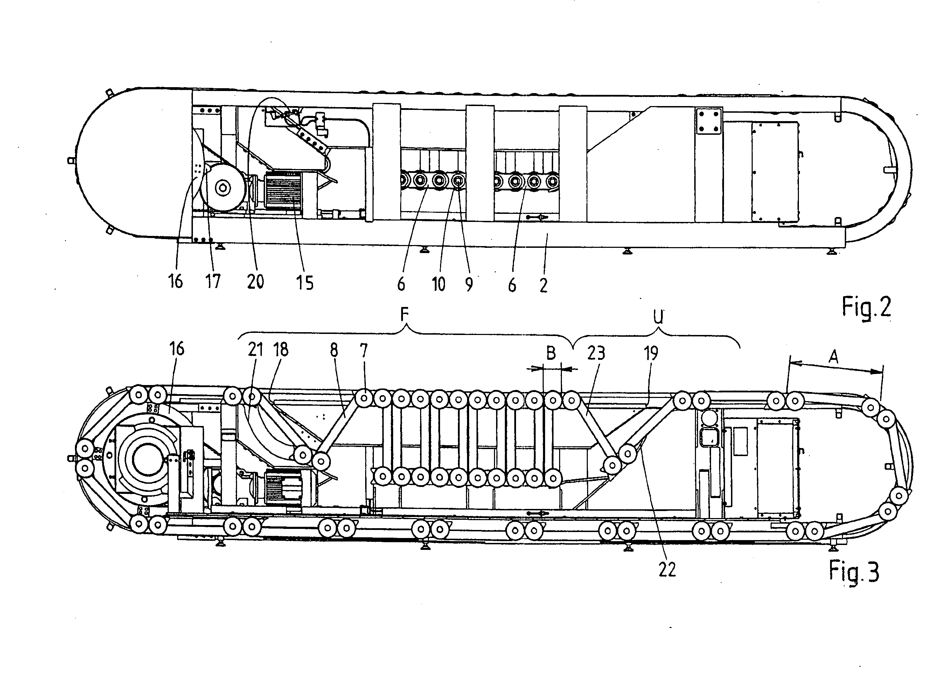

If the ratio (A/B) of the effective length ('A' in Figure 3) of the second surface and the effective length (B) of the first surface is in a range from 3 to 7, the conveyor will, on the one hand, provide a relatively high degree of separation and, on the other hand, be able to operate at a relatively high troughput.
The invention also relates to a method of organising items, in particular for unstacking, separating and/or turning over goods, as defined in claim 6.

It is preferred that, at the start of the unfolding of the belt, a V-shaped trough is formed.

The invention will now be explained in more detail with reference to the drawings, which schematically show a preferred embodiment according to the present invention.
Figure 1 is a perspective view of a conveyor in accordance with the present invention.
Figures 2 and 3 are a side view and a cross-section, respectively, of the conveyor in Figure 1.
Figure 4 is a perspective view of a luggage handling system comprising the conveyor according to Figures 1 to 3.

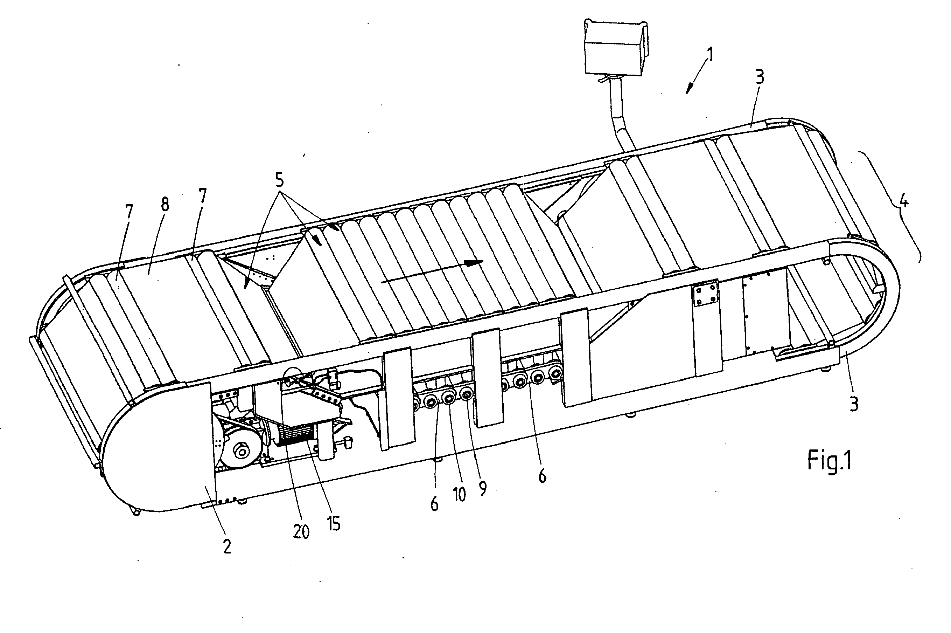

Figures 1 to 3 show a conveyor 1 for separating goods, such as pieces of luggage, in the conveyor direction (indicated by an arrow in Figure 1), which conveyor 1 comprises a frame 2, on either side provided with an endless guide rail 3, and an endless belt 4 mounted in the guide rails 3. The belt 4 comprises a chain of pivotally interconnected lamellae 5 and links 6.

Each lamella 5 comprises two rods 7, extending transverse to the conveyor direction and having, in this example, a circular cross-section, and a rectangular plate 8 attached, e.g. welded, with its long sides, to the rods 7. Each of the rods 7 comprises a shaft 9 which, on its ends, is provided with wheels 10 for following the guide rails 3. Further, the shafts 9 of adjacent lamellae 5 are pivotally interconnected by means of the links 6. The lamellae 5 are preferably made of a rigid material, in particular a metal, such as aluminium, steel, or a synthetic material.

An electrical motor 15 and a set of pusher wheels 16 driven by the motor 15 are mounted in the frame 2. Each of the wheels 16 comprises, evenly distributed along its circumference, a plurality of pushers 17 for pushing the lamellae 5 in at least an upstream section of the top surface of the belt 4 in the conveyor direction, while pulling the rest of the belt.

The links 6 are adapted to both abut and rotate relative to each other so as to enable each link 6 to push forward its downstream neighbour. In this example, one end of each link 6 is semi-circular and concave, whereas the other end is semi-circular and convex.

The upper half of the guides 3 comprises openings 18, 19 allowing links 6 to be temporarily lowered from (18) and re-entered (19) into the guides 3. The upstream openings 18 are operatively associated with switches 20, which either clear or block these openings 18.

During operation, the belt 4 is pushed in the conveyor direction and the switches 20 direct the links 6 alternately along upper horizontal sections of the respective guide rails 3 or downward through the openings 18 in the rails 3 and into curved guides 21, thus folding the belt 4 and, as a result, locally reducing the effective length and the speed of the surface for carrying the items. In this example, the ratio of the length A (Figure 3) of the lamellae 5, i.e. the distance between the outer edges of the rods 7, to the effective thickness B of the lamellae 5, i.e. the diameter of the rods 7, equals about (400 mm / 80 mm =) 5, which, in this particular conveyor 1 and at normal operating conditions, corresponds to a throughput of one standard suitcase (0,8 m long) every three seconds.

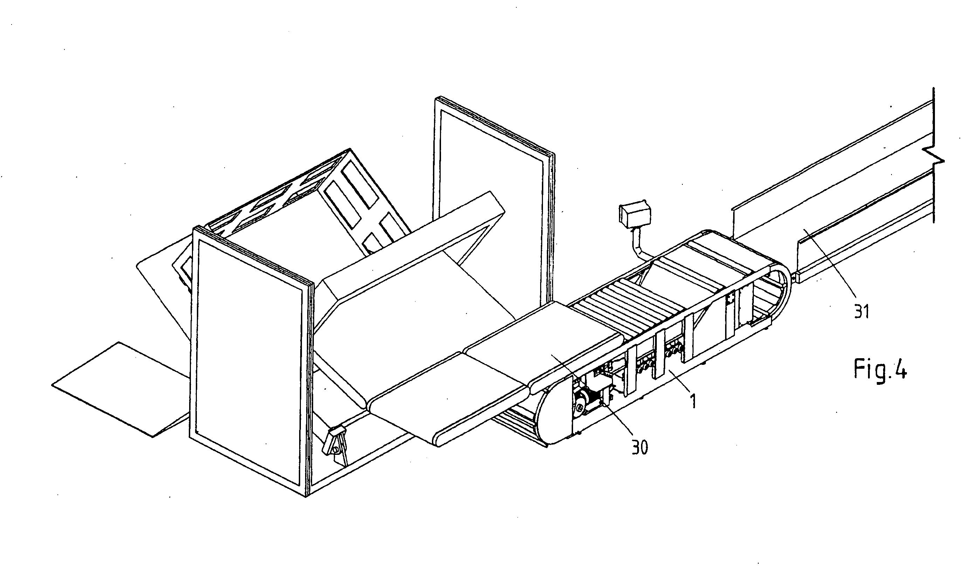

Items, in this example pieces of luggage, are deposited from a supply 30 (Figure 4) onto the folded section ('F' in Figure 3) of the belt 4. As the belt 4 moves along, the folded lamellae 5 are unfolded, one pair of lamellae 5 at a time, while the links 6 follow curved guides 22. It noted that the point where unfolding begins is primarily determined by the number and the dimensions of the lamellae 5 and the links 6, i.e. the said guides 22 and indeed the upstream guides 21 are merely provided to support the unfolding respectively folding process.

During unfolding, the respective pair of lamellae 5 forms a V-shaped trough 23, which causes the item(s) on the adjacent upstream lamella 5 to keel over, typically to its (their) most stable position, e.g. flat on the belt. Also, unfolding will locally increase the effective length and the speed of the surface carrying the items, thus increasing the distance between the item(s) on the unfolded lamellae 5 and the upstream items.

Finally, the items are deposited onto a downstream conveyor 31 and the unfolded endless belt 4 is pulled through the rails 3 and via the bottom of the frame 1 to the wheels 16.

As will be clear from the example presented above, the conveyor according to the present invention enables effective unstacking, separating and/or keeling over items, in particular pieces of luggage, all within a single, relatively compact conveyor.

The invention is not restricted to the above-described embodiments, which can be varied in a number of ways within the scope of the claims. For instance, to facilitate manipulation of the links, two guides may be provided on either side of the frame, the links alternately following the outer or inner guides. Also, the present concept may be used in other handling systems, e.g. for arranging articles in a warehouse or singulating packages in an express mail handling room to facilitate further processing.

## Claims

1. Conveyor (1) for organising items, in particular for unstacking, separating and/or turning over goods, comprising a frame (2), an endless belt mounted in the frame (2) and providing a top surface for carrying a plurality of items, and a means (15) for driving the belt (4), wherein the conveyor (1) is arranged to fold the belt (4) together in an upstream section (F) of the top surface and unfold the belt in a downstream section (U),
wherein the belt (4) comprises a chain of pivotally interconnected elements (5), **characterized in that**
the elements (5) are at least substantially flat and comprise a first surface (7) for carrying items in a folded condition (F) and a second surface (7, 8) for carrying items in an unfolded condition (U).

2. Conveyor (1) according to claim 1, wherein the ratio (A/B) of the effective length (A) of the second surface (7, 8) and the effective length (B) of the first surface (7) is in a range from 3 to 7.

3. Conveyor (1) according to any one of the preceding claims, comprising a motor (15) for pushing the top surface of the belt (4) in the conveying direction.

4. Conveyor (1) according to any one of the preceding claims, wherein the elements (5) are made of a rigid material, in particular a metal, such as aluminium, or a synthetic material.

5. System (1, 30, 31) for handling items comprising a conveyor (1) according to any one of the preceding claims and a supply (30) for the items, which supply (30) is positioned over the folded elements (5) of the conveyor (1).

6. Method of organising items, in particular for separating and/or turning over goods, by means of a conveyor (1) comprising an endless belt (4), which provides a top surface for carrying a plurality of items,
and which comprises a chain of pivotally interconnected elements (5), **characterized in that**
the elements are at least substantially flat and comprise a first surface (7) for carrying items in a folded condition (F) and a second surface (7, 8) for carrying items in an unfolded condition (U)
the method comprising the steps of
locally folding the belt (4), thus locally reducing the effective length and the speed of the surface for carrying the items,
depositing items on the folded belt (4), and
unfolding the belt (4), thus locally increasing the effective length and the speed of the surface carrying the items.

7. Method according to claim 6, wherein the folding and unfolding of the belt (4) is achieved by pushing at least an upstream section (F) of the top surface of the belt (4) in the conveyor direction, preferably while pulling the rest of the belt.

8. Method according to claim 6 or 7, wherein, at the start of the unfolding of the belt, a V-shaped trough (23) is formed.

## Patentansprüche

1. Förderer (1) für das Organisieren von Gegenständen, insbesondere für das Entstapeln, Trennen und/oder Wenden von Gütern, umfassend einen Rahmen (2), ein Endlosband, das in dem Rahmen (2) montiert ist und eine obere Oberfläche zum Tragen einer Vielzahl von Gegenständen bereitstellt, und Mitteln (15) zum Treiben des Bandes (4), wobei der Förderer (1) angeordnet ist, um das Band (4) in einem stromaufwärts gelegenen Bereich (F) der oberen Oberfläche zusammenzufalten und in einem stromabwärts gelegenen Abschnitt (U) zu entfalten, wobei das Band (4) eine Kette von schwenkbar verbundenen Elementen (5) aufweist, **dadurch gekennzeichnet, dass** die Elemente (5) zumindest im Wesentlichen flach sind und eine erste Oberfläche (7) für das Tragen von Gegenständen in gefaltetem Zustand (F) und eine zweite Oberfläche (7,8) für das Tragen von Gegenständen in einem ungefalteten Zustand (U) aufweisen.

2. Förderer (1) gemäß Anspruch 1, wobei das Verhältnis (A/B) der effektiven Länge (A) der zweiten Oberfläche (7,8) und der effektiven Länge (B) der ersten Oberfläche (7) in einem Bereich von 3 bis 7 ist.

3. Förderer (1) gemäß einem der vorangehenden Ansprüche, umfassend einen Motor (15) für das Drücken der oberen Oberfläche des Bandes (4) in der Förderrichtung.

4. Förderer (1) gemäß einem der vorangehenden Ansprüche, wobei die Elemente (5) aus hartem Material, insbesondere einem Metall, derart wie Aluminium, oder aus einem synthetischen Material gemacht sind.

5. System (1,30, 31) zum Fördern von Gegenständen, umfassend einen Förderer (1) entsprechend einem der vorangehenden Ansprüche und eine Zuführung (30) für Gegenstände, welche Zuführung (30) über den gefalteten Elementen (5) des Förderers (1) positioniert ist.

6. Verfahren zum Organisieren von Gegenständen, insbesondere zum Trennen und/oder Wenden von Gütern, mittels eines Förderers (1), umfassend ein Endlosband (4), welches eine obere Oberfläche zum Tragen von einer Vielzahl von Gegenständen bereitstellt und welches eine Kette von schwenkbar verbundenen Elementen (5) aufweist, **dadurch gekennzeichnet, dass** die Elemente zumindest im Wesentlichen flach sind und eine erste Oberfläche (7) für das Tragen von Gegenständen in einem gefalteten Zustand (F) und eine zweite Oberfläche (7,8) für das Tragen von Gegenständen in ungefaltetem Zustand (U) aufweist, wobei das Verfahren die Schritte aufweist:
lokales Falten des Bandes (4), und daher lokales Reduzieren der effektiven Länge und der Geschwindigkeit der Oberfläche zum Tragen von Gegenständen,
Ablegen von Gegenständen auf dem gefalteten Band (4), und
Entfalten des Bandes (4) und daher lokales Vergrößern der effektiven Länge und der Geschwindigkeit der Oberfläche, die die Gegenstände trägt.

7. Verfahren gemäß Anspruch 6, wobei das Falten und Entfalten des Bandes (4) durch Drücken zumindest eines stromaufwärts gelegenen Bereichs (F) der oberen Oberfläche des Bandes (4) in Förderrichtung erzeugt wird, vorzugsweise während des Ziehens des Restes des Bandes.

8. Verfahren gemäß Anspruch 6 oder 7, wobei, zu Beginn des Entfaltens des Bandes, eine V-förmige Mulde (23) gebildet wird.

## Revendications

1. Transporteur (1) pour ordonner des articles, en particulier pour reprendre, séparer et/ou retourner des marchandises, comprenant un cadre (2), un tapis sans fin monté dans le cadre (2) et fournissant une surface supérieure pour transporter une pluralité d'articles, et un moyen (15) pour entraîner le tapis (4), dans lequel le transporteur (1) est agencé pour plier le tapis (4) dans une section amont (F) de la surface supérieure et pour déplier le tapis dans une section aval (U), le tapis (4) comprenant une chaine d'éléments (5) interconnectés de manière pivotante, **caractérisé en ce que** les éléments (5) sont au moins sensiblement plats et comprennent une première surface (7) pour transporter les articles dans un état plié (F) et une deuxième surface (7, 8) pour transporter les articles dans un état déplié (U).

2. Transporteur (1) selon la revendication 1, dans lequel le rapport (A/B) entre la longueur réelle (A) de la deuxième surface (7, 8) et la longueur réelle (B) de la première surface (7) est compris entre 3 et 7.

3. Transporteur (1) selon l'une quelconque des revendications précédentes, comprenant un moteur (15) pour pousser la surface supérieure du tapis (4) dans la direction de transport.

4. Transporteur (1) selon l'une quelconque des revendications précédentes, dans lequel les éléments (5) sont constitués d'un matériau rigide, en particulier d'un métal, comme de l'aluminium, ou d'un matériau synthétique.

5. Système (1, 30, 31) pour manipuler des articles comprenant un transporteur (1) selon l'une quelconque des revendications précédentes et une alimentation (30) pour les articles, ladite alimentation (30) étant positionnée au-dessus des éléments pliés (5) du transporteur (1).

6. Procédé pour ordonner des articles, en particulier pour séparer et/ou retourner des marchandises, au moyen d'un transporteur (1) comprenant un tapis sans fin (4), qui fournit une surface supérieure pour transporter une pluralité d'articles et qui comprend une chaîne constituée d'éléments (5) interconnectés de manière pivotante, **caractérisé en ce que**
les éléments sont au moins sensiblement plats et comprennent une première surface (7) pour transporter les articles dans un état plié (F) et une deuxième surface (7, 8) pour transporter les articles dans un état déplié (U),
le procédé comprenant les étapes consistant à
plier localement le tapis (4), afin de réduire localement la longueur réelle et la vitesse de la surface de transport des articles,
déposer des articles sur le tapis plié (4), et
déplier le tapis(4), afin d'augmenter localement la longueur réelle et la vitesse de la surface de transport des articles.

7. Procédé selon la revendication 6, dans lequel le pliage et le dépliage du tapis (4) sont obtenus en poussant au moins une section amont (F) de la surface supérieure du tapis (4) dans la direction de transport, tout en tirant de préférence le reste du tapis.

8. Procédé selon la revendication 6 ou 7, dans lequel, au début du dépliage du tapis, une auge en forme de V (23) est formée.
